# EUROPEAN PATENT SPECIFICATION

(11) **EP 4 411 873 B1**
(45) Date of publication and mention of the grant of the patent: **16.09.2026**
(21) Application number: 24156090.3
(22) Date of filing: 06.02.2024
(51) Int. Cl.: H01M 4/134, H01M 4/133, H01M 4/1393, H01M 4/1395, H01M 4/36, H01M 4/38, H01M 4/583, H01M 4/587, C01B 33/02, C01B 32/05, C01B 33/113, H01M 4/62, H01M 10/0525, H01M 4/02

(54) **A POROUS SILICON-CARBON ANODE ELECTRODE MATERIAL, A PREPARATION METHOD AND AN APPLICATION**
PORÖSES SILICIUM-KOHLENSTOFF-ANODENELEKTRODENMATERIAL, HERSTELLUNGSVERFAHREN UND ANWENDUNG
MATÉRIAU D'ÉLECTRODE D'ANODE EN SILICIUM-CARBONE POREUX, PROCÉDÉ DE PRÉPARATION ET APPLICATION

(30) Priority: 06.02.2023 CN 202310077792
(43) Date of publication of application: 07.08.2024
(73) Proprietor: Jiangsu Zenergy Battery Technologies Group Co., Ltd., Suzhou City, Jiangsu 215500 (CN)
(72) Inventor: ZHONG, Yingsheng, Changshu Suzhou City, 215500 (CN); TANG, Wen, Changshu Suzhou City, 215500 (CN); ZHANG, Hao, Changshu Suzhou City, 215500 (CN); LIU, Jiao, Changshu Suzhou City, 215500 (CN); JIANG, Kecheng, Changshu Suzhou City, 215500 (CN)
(74) Representative: Studio Torta S.p.A.

(56) References cited:
- EP-A1- 3 836 261
- EP-A1- 4 345 942
- CN-A- 111 146 430
- CN-A- 113 193 183
- CN-A- 113 851 627
- CN-A- 115 642 233
- CN-B- 107 293 700
- US-A1- 2018 342 732

## Description

### Technical Field

The present disclosure belongs to the technical field of lithium-ion batteries, and specifically relates to a porous silicon-carbon anode electrode material, a preparation method, and an application.

### Background

At present, lithium-ion batteries (LIB) are widely used in portable devices and electronic products. However, there are still some problems in the application of electric vehicles and renewable energy storage power grids, including energy density, material cost, and usage safety and the like. Improving the energy density and cycle life of the lithium-ion batteries is a crucial aspect.

A silicon anode electrode has a very high theoretical capacity (4200 mAh/g), which is about 10 times of the capacity (about 370 mAh/g) of existing available commercial graphite anode electrodes, it is beneficial for improving the energy density of the lithium-ion batteries and has a great potential for applications.

However, in the process of lithium ion intercalation and deintercalation, it is accompanied with the volume expansion and contraction of a silicon anode electrode material, leading to the fragmentation of silicon particles, deterioration of electrical contact, and instability of a solid electrolyte interface (SEI) film, and ultimately problems such as reduced efficiency and rapid cycling capacity fade of the silicon anode electrode material are caused. In contrast, a SiOx (0<x<2) anode electrode material has a much smaller volume change in the process of lithium ion extraction and insertion than the pure silicon anode electrode material, but its conductivity is slightly poor. Since a carbon material has certain mechanical strength and conductivity, a mode of mixing carbon and silicon oxide is commonly used to solve the above problems at present, but the effect is very small. How to design carbon structures and distribution of SiOx to better improve the compressive strength of the SiOx anode electrode material, solve the volume expansion effect of the silicon anode electrode material and the conductivity of silicon anode electrode material systems, and improve the battery cycling performance is still a focus of attention.

CN 115642233 A disclosed a graphitized porous silicon-carbon anode material, a preparation method thereof, and a lithium ion battery. The silicon-carbon anode material comprised a core and a carbon coating layer coated on an outer surface of the core, and was characterised in that the core sequentially comprised an inner layer and a shallow surface layer from inside to outside, the silicon-carbon anode material was internally provided with pores in gradient distribution, and the porosity was gradiently decreased from inside to outside along the inner layer, the shallow surface layer and the carbon coating layer; and the core comprised a silicon-carbon composite comprising nano-silicon particles, a conductive agent and a graphitized carbon material. The graphitized silicon-carbon anode material could solve the problems that a porous structure was prone to crack and the multiplying power was reduced.

### Summary

In view of this, a technical problem to be solved by the present disclosure is to provide a porous silicon-carbon anode electrode material, a preparation method, and an application. The porous silicon-carbon anode electrode material provided by the present disclosure may better improve the compressive strength of a SiOx anode electrode material, solve the volume expansion effect of the silicon anode electrode material and the conductivity of silicon anode electrode material systems, and improve the battery cycling performance.

The present invention provides a porous silicon-carbon anode electrode material, and the anode electrode material has a core-shell structure and the core-shell structure sequentially includes: a porous sparse silicon-carbon core, a transition layer, a dense silicon-carbon layer, and a carbon coating layer from inside to outside; the transition layer includes a carbon skeleton and silicon crystal particles inserted in the carbon skeleton, and the carbon skeleton at least includes pore carbon and poreless carbon; the carbon content of the porous sparse silicon-carbon core is >40wt%; the carbon content of the transition layer is 10wt%-40wt%; the carbon content of the dense silicon layer is 2wt%-32wt%.

Preferably, the porous sparse silicon-carbon core includes porous carbon and silicon crystal particles inserted in the skeleton of the porous carbon.

The particle size of the porous sparse silicon-carbon core is 1.5-28.0 µm.

The structure of the transition layer gradually becomes denser in a direction from the porous sparse silicon-carbon core to the dense silicon-carbon layer.

The thickness of the transition layer is 3-150 nm.

Preferably, the dense silicon-carbon layer is an oligoporous structure, and includes a carbon and silicon crystal particles, the silicon crystal particles are in close contact with the carbon particles; wherein, the dense silicon-carbon layer being of an oligoporous structure means that the pore volume of the oligoporous structure per gram of the porous silicon-carbon anode electrode material is ≤ 0.05 cm³/g, and preferably, the pore volume of the oligoporous structure is 0.0008-0.0012 cm³/g.

The thickness of the dense silicon-carbon layer is 2-150 nm.

Preferably, the silicon crystal particle includes a silicon crystal monodispersed particle and/or a silicon crystal aggregated particle.

The size of the silicon crystal monodispersed particle is 1-20 nm.

The size of the silicon crystal aggregated particle is 40-200 nm.

Preferably, the thickness of the carbon coating layer is 5-400 nm.

The carbon coating layer sequentially includes a porous carbon coating layer and a dense carbon coating layer from inside to outside.

The porous carbon coating layer is a porous fluffy structure.

The dense carbon coating layer is a dense structure.

The thickness of the porous carbon coating layer is greater than the thickness of the dense carbon coating layer.

The porosity of the porous carbon coating layer structure is greater than the porosity of the porous sparse silicon-carbon core structure.

The pore volume of the porous carbon coating layer is greater than the pore volume of the dense carbon coating layer.

Preferably, Si in the porous silicon-carbon anode electrode material is distributed as elemental silicon and/or oxide of silicon in the porous sparse silicon-carbon core, the transition layer, and the dense silicon-carbon layer; Si accounts for 5%-90% of the mass of the porous silicon-carbon anode electrode material.

The median particle size D50 of the porous silicon-carbon anode electrode material is 3.0-22.0 µm.

Preferably, the residual alkaline lithium content of the porous silicon-carbon anode electrode material is 50-4000 ppm.

The present invention further provides a preparation method for the above porous silicon-carbon anode electrode material, including the following steps:

A) a first silicon source compound, a first carbon source compound, and ammonium bicarbonate are mixed, it is heated after being vacuumized, then a non-oxidizing gas is fed to be pressurized, formation of micro-pores is maintained in a mixture, and it is cooled after being stabilized, to obtain a mixed solid;

B) the mixed solid is heated at a high temperature and crushed, then it is mixed with a hydrofluoric acid for acid washing, to obtain a porous silicon precursor;

C) the porous silicon precursor is mixed with a silicon hydride compound SiₙH₂ₙ₊₂, high-temperature treatment is performed under a certain pressure condition, then an acetylene mixed gas using the non-oxidizing gas as a carrier gas is fed for a gas-phase deposition reaction, to obtain a reaction product;

D) the reaction product is mixed with a functional material and a dispersant, and after being spray-dried, a high-temperature reaction is performed, to obtain the porous silicon-carbon anode electrode material.

Preferably, in Step A), the first silicon source compound is one or more of tetraethyl orthosilicate, polyorganosiloxane, methylchlorosilane, silicone gel, and SiO₂ with a particle size of 3-200 nm.

The first carbon source compound is one or more of asphalt resin, phenolic resin, furan resin, or polyacrylonitrile.

The mass ratio of the first silicon source compound, the first carbon source compound, and the ammonium bicarbonate is 100:5-80:0.01-0.5.

The non-oxidizing gas is one or more of nitrogen gas, helium gas, neon gas, argon gas, and krypton gas.

The heating temperature is 60-200 °C.

The pressure at which the non-oxidizing gas is fed to be pressurized is 0.75-5 MPa.

In Step B), the temperature of the high-temperature heating is 600-1300 °C.

The particle size of the crushed particles is 0.6-50 µm.

In Step C), in the silicon hydrogen compound SiₙH₂ₙ₊₂, n is 1-8.

The certain pressure condition is a pressure of 0.02-0.4 MPa.

The temperature of the high-temperature treatment is 300-600 °C, and the time is 1-8 h.

The temperature of the gas-phase deposition reaction is 500-1300 °C, and the time is 3 min-10 h.

In the acetylene mixed gas using the non-oxidizing gas as the carrier gas, the volume proportion of the non-oxidizing gas is 50-98%.

In Step D), the mass ratio of the reaction product to the functional material is 100:0.01-8.

The functional material includes one or more of lithium chloride, butyl lithium, lithium phosphate, lithium metaaluminate, lithium aluminate, magnesium metaaluminate, magnesium aluminate, isopropanol lithium, lithium bromide, phenyl lithium, magnesium bromide, magnesium chloride, and magnesium powder.

The dispersant is selected from one or more of glycerol solution, ethylene glycol solution, and polyethylene glycol solution.

The mixing and the spray-drying are performed under an aerobic condition.

The temperature of the high-temperature reaction is 200-600 °C, the time is 30 min-15 h, and the high-temperature reaction is performed under a condition of isolating oxygen.

The present disclosure further provides an anode electrode plate, including the above porous silicon-carbon anode electrode material or the porous silicon-carbon anode electrode material prepared by the above preparation method.

The present disclosure further provides a lithium-ion battery, including the above anode electrode plate.

Compared with existing technologies, the present disclosure provides a porous silicon-carbon anode electrode material, and the anode electrode material has a core-shell structure and the core-shell structure sequentially includes: a porous sparse silicon-carbon core, a transition layer, a dense silicon-carbon layer, and a carbon coating layer from inside to outside. Porous carbon, with silicon particles distributed in gaps of the carbon skeleton structure, of the porous silicon-carbon anode electrode material in the present disclosure has a porous gap structure, which may provide excellent flexibility and mechanical strength, and may buffer expansion and contraction stress generated by lithium ion extraction and insertion. Metal elements doped in the porous carbon with the silicon particles distributed in the gaps of the carbon skeleton structure, the carbon coating layer, and the dense carbon layer have good electrical conductivity, which may improve the conductivity of the material. The silicon particles in the porous silicon-carbon anode electrode material are reasonably distributed in gaps between carbon particles of porous carbon, have excellent comprehensive performance, effectively slow down the expansion of the silicon anode electrode material in the cycling process, control capacity fade, and improve cycling stability.

### Brief Description of the Drawings

Fig. 1 is a cross-sectional structure schematic diagram of a sphere-like porous silicon-carbon anode electrode material provided by the present disclosure.
Fig. 2 is a transmission electron microscope (TEM) image of the porous silicon-carbon anode electrode material provided by the present disclosure.
Fig. 3 is an energy dispersive spectrometer (EDS) energy spectrum of a porous sparse silicon-carbon core of the porous silicon-carbon anode electrode material prepared in Embodiment 1.
Fig. 4 is an EDS energy spectrum of a transition layer of the porous silicon-carbon anode electrode material prepared in Embodiment 1.
Fig. 5 is an EDS energy spectrum of a dense silicon-carbon layer of the porous silicon-carbon anode electrode material prepared in Embodiment 1.

### Detailed Description of the Embodiments

The present invention provides a porous silicon-carbon anode electrode material, and the anode electrode material has a core-shell structure and the core-shell structure sequentially includes: a porous sparse silicon-carbon core, a transition layer, a dense silicon-carbon layer, and a carbon coating layer from inside to outside; the transition layer includes a carbon skeleton and silicon crystal particles inserted in the carbon skeleton, and the carbon skeleton at least includes pore carbon and poreless carbon; the carbon content of the porous sparse silicon-carbon core is >40wt%; the carbon content of the transition layer is 10wt%-40wt%; the carbon content of the dense silicon layer is 2wt%-32wt%.

Herein, the porous silicon-carbon anode electrode material provided by the present disclosure includes a porous sparse silicon-carbon core, and the porous sparse silicon-carbon core includes porous carbon and silicon crystal particles inserted in the skeleton of the porous carbon. In the porous sparse silicon-carbon core, silicon, carbon, and pores are uniformly dispersed and distributed. The silicon crystal particles are embedded in "dense-net-like" structure carbon, but do not completely fill the pores of the porous carbon, to ensure that the silicon has a certain buffer space and the internal skeleton of the porous carbon may provide a binding force.

The porous silicon-carbon anode electrode material provided by the present disclosure further includes a transition layer coated on the surface of the porous sparse silicon-carbon core, the transition layer includes a carbon skeleton and silicon crystal particles inserted in the carbon skeleton, and the carbon skeleton at least includes pore carbon and poreless carbon.

The particle size of the porous sparse silicon-carbon core is 1.5-28.0 µm, preferably 1.5 µm, 5 µm, 10 µm, 15 µm, 20 µm, 25 µm, 28 µm, or any values between 1.5-28.0 µm.

The structure of the transition layer gradually becomes denser in a direction from the porous sparse silicon-carbon core to the dense silicon-carbon layer. The porosity of the carbon skeleton, close to a porous sparse silicon-carbon core side, in the transition layer is ≤ the porosity of the porous carbon in the porous sparse silicon-carbon core, namely a portion close to the porous sparse silicon-carbon core is mainly composed of silicon crystal particles dispersed inside the "dense-net-like" structure carbon, and a portion close to the dense silicon-carbon layer is mainly composed of silicon crystal particles dispersed inside the poreless carbon.

The thickness of the transition layer is 2-150 nm, preferably 2 nm, 15 nm, 20 nm, 25 nm, 50 nm, 75 nm, 100 nm, 125 nm, 150 nm, or any values between 2-150 nm.

The carbon content of the transition layer is 10wt%, 20wt%, 30wt%, 40wt%, or any values between 10wt%-40wt%.

The porous silicon-carbon anode electrode material provided by the present disclosure further includes a dense silicon-carbon layer coated on the surface of the transition layer. The dense silicon-carbon layer is an oligoporous structure, and includes carbon and silicon crystal particles, the silicon crystal particles are in close contact with the carbon particles; the silicon and carbon particles are tightly combined, and the silicon and carbon particles are densely and uniformly dispersed and distributed. Herein, the porosity of the carbon skeleton, close to a dense silicon-carbon side, in the transition layer is ≥ the porosity of the carbon in the dense silicon-carbon.

The carbon content of the dense silicon layer is 2wt%, 5wt%, 10wt%, 15wt%, 20wt%, 25wt%, 32wt%, or any values between 2wt%-32wt%.

The thickness of the dense silicon-carbon layer is 3-150 nm, preferably 3 nm, 10 nm, 20 nm, 25 nm, 50 nm, 75 nm, 100 nm, 125 nm, 150 nm, or any values between 3-150 nm.

In the present disclosure, the porous sparse silicon-carbon core, the transition layer, and the dense silicon-carbon layer include silicon crystal particles. The silicon crystal particle includes a silicon crystal monodispersed particle and/or a silicon crystal aggregated particle; the size of the silicon crystal monodispersed particle is 1-20 nm, preferably 1.8-10 nm, further preferably 1.8 nm, 2 nm, 2.5 nm, 3 nm, 3.5 nm, 4 nm, 4.5 nm, 5 nm, 5.5 nm, 6 nm, 6.5 nm, 7 nm, 7.5 nm, 8 nm, 8.5 nm, 9 nm, 9.5 nm, 10 nm, or any values between 1.8-10 nm. The size of the silicon crystal aggregated particle is 40-200 nm, preferably 50-180 nm, further preferably 50 nm, 55 nm, 60 nm, 65 nm, 70 nm, 75 nm, 80 nm, 85 nm, 90 nm, 95 nm, 100 nm, 105 nm, 110 nm, 115 nm, 120 nm, 125 nm, 130 nm, 135 nm, 140 nm, 145 nm, 150 nm, 155 nm, 160 nm, 165 nm, 170 nm, 175 nm, 180 m, or any values between 50-180 nm.

The porous silicon-carbon anode electrode material provided by the present disclosure further includes a carbon coating layer coated on the surface of the dense silicon-carbon layer.

The thickness of the carbon coating layer is 5-400 nm, preferably 6 nm, 12 nm, 18 nm, 30 nm, 35 nm, 50 nm, 60 nm, 90 nm, 100 nm, 120 nm, 150 nm, 160 nm, 180 nm, 190 nm, 200 nm, 220nm, 250 nm, 280 nm, 300 nm, 350 nm, 370 nm, 390 nm, or any values between 5-400 nm.

The carbon coating layer sequentially includes a porous carbon coating layer and a dense carbon coating layer from inside to outside.

Herein, the porous carbon coating layer is a porous fluffy structure; and the porous carbon coating layer is a "sparse-net-like" structure carbon layer, and it is porous and fluffy.

The dense carbon coating layer is a dense structure; and the dense carbon coating layer is a dense carbon layer, and it does not have pores or it has very few pores.

In the porous silicon-carbon anode electrode material, the pore volume of the porous carbon coating layer is greater than the pore volume of the dense carbon coating layer.

In addition, the thickness of the porous carbon coating layer is > the thickness of the dense carbon coating layer.

In the present disclosure, the structure of the porous carbon coating has the more pores than the structure of the porous sparse silicon-carbon core, and the carbon layer of the outer porous carbon coating has the greater elasticity and better buffering.

Si in the porous silicon-carbon anode electrode material is distributed in the form of elemental silicon and/or silicon oxide in the porous sparse silicon-carbon core, the transition layer, and the dense silicon-carbon layer.

Si accounts for 5%-90% of the mass of the porous silicon-carbon anode electrode material, preferably 6%, 8%, 10%, 12%, 15%, 18%, 20%, 25%, 30%, 35%, 38%, 40%, 45%, 48%, 50%, 53%, 55%, 58%, 60%, 62%, 64%, 68%, 70%, 80%, 90%, or any values between 5%-90%.

The median particle size D50 of the porous silicon-carbon anode electrode material is 3.0-22.0 µm, preferably 5.2-12 µm, and more preferably 5.5-10.5 µm. For example, 5.5-6.0 µm, 6-6.8 µm, 6.8-7.2 µm, 7.2-7.7 µm, 7.7-8.3 µm, 8.3-8.9 µm, 8.9-9.3 µm, 9.3-9.9 µm, and 9.9-10.5 µm.

In the present disclosure, the residual alkaline lithium content of the porous silicon-carbon anode electrode material is 50-4000 ppm, preferably between 120-1500 ppm, and further preferably any values between 120-180 ppm, 180-300 ppm, 300-400 ppm, 400-500 ppm, 500-700 ppm, 700-900 ppm, 900-1000 ppm, 1000-1200 ppm, 1200-1400 ppm, or 1400-1500 ppm. The alkaline lithium is selected from one or more of lithium hydroxide and lithium carbonate.

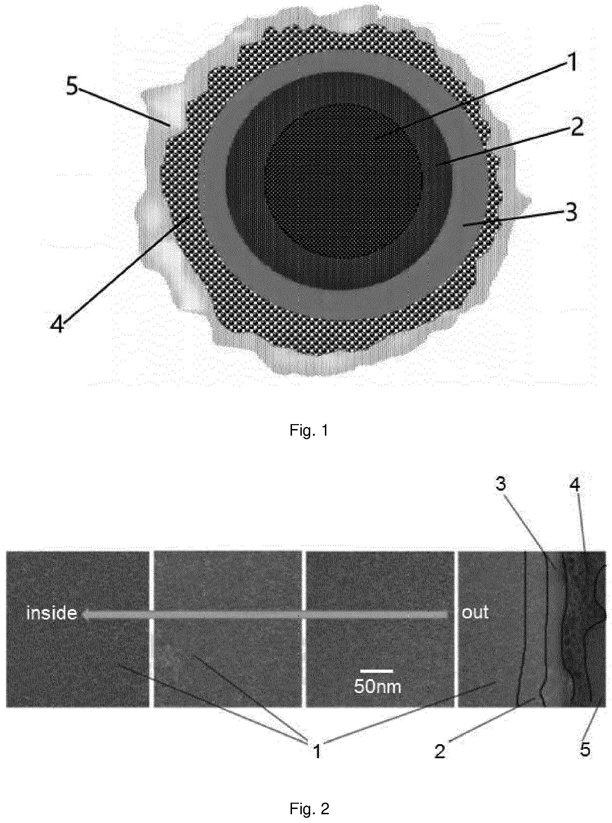

Referring to Fig. 1, Fig. 1 is a cross-sectional structure schematic diagram of a sphere-like porous silicon-carbon anode electrode material provided by the present disclosure. In Fig. 1, 1 is a porous sparse silicon-carbon core, 2 is a transition layer, 3 is a dense silicon-carbon layer, 4 is a porous carbon coating layer, 5 is a dense carbon coating layer.

The present invention further provides a preparation method for the above porous silicon-carbon anode electrode material, including the following steps:
A) a first silicon source compound, a first carbon source compound, and ammonium bicarbonate are mixed, it is heated under a condition of removing the air, then a non-oxidizing gas is fed to be pressurized, formation of micro-pores is maintained in a mixture, and it is cooled after being stabilized, to obtain a mixed solid;
B) the mixed solid is heated at a high temperature and crushed, then it is mixed with a hydrofluoric acid for acid washing, to obtain a porous silicon precursor;
C) the porous silicon precursor is mixed with a silicon hydride compound SiₙH₂ₙ₊₂, high-temperature treatment is performed under a certain pressure condition, then an acetylene mixed gas using the non-oxidizing gas as a carrier gas is fed for a gas-phase deposition reaction, to obtain a reaction product;
D) the reaction product is mixed with a functional material and a dispersant, and after being spray-dried, a high-temperature reaction is performed, to obtain the porous silicon-carbon anode electrode material.

In the present disclosure, the first silicon source compound is mixed with the first carbon source compound, the ammonium bicarbonate is added to obtain the mixture, it is sent to a reaction kettle, it is vacuumized to remove most of the air in the mixture, it is heated, the non-oxidizing gas is fed to be pressurized, the formation of micro-pores is maintained in the mixture, and it is cooled after being stabilized, to obtain the mixed solid.

Herein, the first silicon source compound is one or more of tetraethyl orthosilicate, polyorganosiloxane, methylchlorosilane, silicone gel, and SiO₂ with a particle size of 3-200 nm.

The first carbon source compound is one or more of asphalt resin, phenolic resin, furan resin, or polyacrylonitrile.

The mass ratio of the first silicon source compound, the first carbon source compound, and the ammonium bicarbonate is 100:5-80:0.01-0.5, preferably 100:10:0.02, 100:10:0.05, 100:10:0.1, 100:10:0.2, 100:10:0.3, 100:10:0.5, 100:30:0.02, 100:30:0.05, 100:30:0.1, 100:30:0.2, 100:30:0.3, 100:10:0.5, 100:45:0.02, 100:45:0.05, 100:45:0.1, 100:45:0.2, 100:45:0.3, 100:10:0.5, 100:60:0.02, 100:60:0.05, 100:60:0.1, 100:60:0.2, 100:60:0.3, 100:10:0.5, 100:80:0.02, 100:80:0.05, 100:80:0.1, 100:80:0.2, 100:80:0.3, 100:80:0.5, or any values between 100:5-80:0.01-0.5.

The non-oxidizing gas is one or more of nitrogen gas, helium gas, neon gas, argon gas, or krypton gas.

The heating temperature is 60-200 °C, preferably 60 °C, 80 °C, 100 °C, 120 °C, 140 °C, 160 °C, 180 °C, 200 °C, or any values between 60-200 °C.

The pressure at which the non-oxidizing gas is fed to be pressurized is 0.75-5 MPa, preferably 1.0 MPa, 1.5 MPa, 1.8 MPa, 2.0 MPa, 2.5 MPa, 3 MPa, 3.5 MPa, 4.0 MPa, 4.5 MPa, or any values between 0.75-5 MPa.

Next, the mixed solid is sent to a heating furnace for high-temperature heating at 600-1300 °C, it is cooled, broken, and crushed to obtain particles with a particle size of 0.6-50 µm, the particles are mixed with the hydrofluoric acid for acid washing, and the acid-washed particles are sent to water for washing, and dried to obtain the porous silicon precursor, namely the porous sparse silicon-carbon core.

Herein, in the process of mixing and acid-washing of the particles and the hydrofluoric acid, acid dissolution removes some of the silicon in the particles, nano-pores are left by the silicon dissolved, to form a sparse silicon region lacking in the silicon, including the "dense-net-like" structure carbon and the pores.

The temperature of high-temperature heating is 600-1300 °C, preferably 600 °C, 700 °C, 800 °C, 900 °C, 1000 °C, 1100 °C, 1200 °C, 1300 °C, or any values between 600-1300 °C.

The particle size of the crushed particles is 0.6-50 µm, preferably 0.6 µm, 1 µm, 5 µm, 10 µm, 15 µm, 20 µm, 25 µm, 30 µm, 35 µm, 40 µm, 45 µm, 50 µm, or any values between 0.6-50 µm.

Then, the porous silicon precursor is sent to the heating furnace, the silicon hydride compound SiₙH₂ₙ₊₂ is fed, and the high-temperature treatment is performed at 300-600 °C under a pressure of 0.02-0.4 MPa; then, the temperature is raised to 500-1300 °C, the acetylene mixed gas using the non-oxidizing gas as the carrier gas is subjected to the gas-phase deposition reaction on the porous silicon precursor for 3 min-10 h, to obtain a carbon deposition layer (namely the porous carbon coating layer) deposited on the surface of the porous silicon precursor, and after deposition, annealing and cooling are performed. The high-temperature treatment causes the silicon to diffuse, some of the silicon is accumulated on an inner wall of the carbon deposition layer, the dense silicon-carbon layer is gradually formed, and some of the silicon is diffused inside the dense silicon-carbon layer to form the transition layer because it is not able to accumulate in time, while the carbon deposition layer is exposed to the air before spraying and drying, so that the high-temperature treatment may produce porosification, and the porous carbon coating layer is formed.

Herein, in the silicon hydride compound SiₙH₂ₙ₊₂, n is 1-8, namely 1, 2, 3, 4, 5, 6, 7 or 8.

The certain pressure condition is 0.02-0.4 MPa, preferably 0.02 MPa, 0.05 MPa, 0.1 MPa, 0.15 MPa, 0.2 MPa, 0.25 MPa, 0.3 MPa, 0.4 MPa, or any values between 0.02-0.4 MPa.

The temperature of the high-temperature treatment is 300-600 °C, preferably 300 °C, 350 °C, 400 °C, 450 °C, 500 °C, 600 °C, or any values between 300-600 °C.

In the process of the high-temperature treatment, the silicon hydride compound enter the pores of the sparse silicon region lacking in the silicon, and some of the silicon cracked undergoes a disproportionation reaction with silicon dioxide, to obtain SiOx (0<x<2), and the cracked silicon is adhered to the pores of the sparse silicon region lacking in the silicon and diffused around the porous sparse silicon-carbon core to form the transition layer and the dense silicon-carbon layer.

The temperature of the gas-phase deposition reaction is 500-1300 °C, preferably 500 °C, 600 °C, 700 °C, 800 °C, 900 °C, 1000 °C, 1100 °C, 1200 °C, 1300 °C, or any values between 500-1300 °C, and the time is 3 min-10 h, preferably 3 min, 5 min, 10 min, 30 min, 1 h, 2 h, 3 h, 4 h, 5 h, 6 h, 7 h, 8 h, 9 h, 10 h, or any values between 3 min-10 h.

In the acetylene mixed gas using the non-oxidizing gas as the carrier gas, the volume proportion of the non-oxidizing gas is 50-98%, preferably 50%, 55%, 60%, 65%, 70%, 75%, 80%, 85%, 90%, 95%, 98%, or any values between 50-98%.

The dispersant is added to the reaction product prepared above and the functional material, it is mixed, immersed, stirred uniformly, and spray-dried, and the mixing and spray-drying are performed under an aerobic condition, preferably an air atmosphere condition.

Then, it is sent to the heating furnace and subjected to the high-temperature reaction at 200-600 °C for 30 min-15 h, to obtain the dense carbon coating layer, and after annealing and cooling, the porous silicon-carbon anode electrode material is obtained. After the spray-drying of the dispersant, some portions form the dense carbon coating layer after high-temperature carbonization.

Herein, the mass ratio of the reaction product to the functional material is 100:0.01-8, preferably 100:0.01, 100:0.05, 100:0.1, 100:0.5, 100:1, 100:2, 100:3, 100:4, 100:5, 100:6, 100:7, 100:8, or any values between 100:0.01-8.

The functional material includes one or more of lithium chloride, butyl lithium, lithium phosphate, lithium metaaluminate, lithium aluminate, magnesium metaaluminate, magnesium aluminate, isopropanol lithium, lithium bromide, phenyl lithium, magnesium bromide, magnesium chloride, and magnesium powder. In the present disclosure, the functional material may improve the electrical performance of the material on the one hand, and improve the structural stability of the material on the other hand.

The dispersant is selected from one or more of glycerol solution, ethylene glycol solution, and polyethylene glycol solution, preferably 30wt% of the glycerol solution.

The temperature of the high-temperature reaction is 200-600 °C, preferably 200 °C, 250 °C, 300 °C, 350 °C, 400 °C, 450 °C, 500 °C, 550 °C, 600 °C, preferably any values between 200-600 °C, and the time is 30 min-15 h, preferably 30 min, 1 h, 2 h, 3 h, 4 h, 5 h, 6 h, 7 h, 8 h, 9 h, 10 h, 11 h, 12 h, 13 h, 14 h, 15 h, or any values between 30 min-15 h. The high-temperature reaction is performed under a condition of isolating oxygen.

In the present disclosure, the porous silicon-carbon anode electrode material is subjected to treatment such as crushing and ball-milling during preparation. The porous silicon-carbon anode electrode material presents particle shapes such as spherical, ellipsoidal, block-shaped, strip-shaped, and sheet-shaped, so that the two-dimensional cross-sections of a sparse silicon region, a transition ring, a dense silicon ring, and a carbon coating region obtained by sectioning the porous silicon-carbon anode electrode material are sphere, ellipse, irregular polygon, circular ring, polygonal ring, arc-shaped ring, irregular ring, irregular edge and the like. Herein, the sparse silicon region corresponds to the porous sparse silicon-carbon core, the transition ring corresponds to the transition layer, the dense silicon ring corresponds to the dense silicon-carbon layer, the carbon coating region corresponds to the porous carbon coating layer and the dense carbon coating layer.

The present disclosure further provides an anode electrode plate, including the above porous silicon-carbon anode electrode material.

The present disclosure does not have any special limitations on a preparation method for the anode electrode plate, and a method well-known to those skilled in the art is sufficient.

Specifically, an anode electrode active material, a conductive material, a bonding substance, and water are mixed, the solid content is controlled to 35-75%, and the viscosity is adjusted to 1500-6000 mPa.s, to obtain an anode electrode homogenate. The anode electrode homogenate is coated on an anode electrode current collector, and it is dried, and plate-pressed, to obtain the silicon anode electrode plate.

Herein, in the present disclosure, the anode electrode active material is selected from the above porous silicon-carbon anode electrode material, or a mixed material of the above porous silicon-carbon anode electrode material and a graphite anode electrode material. The graphite anode electrode material is one or more of artificial graphite, natural graphite, and modified graphite; and when the anode electrode active material is the mixed material of the porous silicon-carbon anode electrode material and the graphite anode electrode material, the porous silicon-carbon anode electrode material accounts for 0.4-80% of the mass of the mixed material.

The bonding substance is selected from one or more of monomers, polymers, and copolymers of acrylonitrile, vinylidene fluoride, vinyl alcohol, carboxymethyl cellulose, lithium carboxymethyl cellulose, sodium carboxymethyl cellulose, methacryloyl, acrylic acid, lithium acrylate, acrylamide, amide, imide, acrylic ester, butadiene styrene rubber, sodium alginate, chitosan, ethylene glycol, and guar gum.

The conductive material is at least one of conductive carbon black, acetylene black, graphite, graphene, carbon micro/nano wire-shaped conductive material, and carbon micro/nano tube-shaped conductive material.

The anode electrode current collector is one or more of copper foil, porous copper foil, foam nickel/copper foil, zinc-plated copper foil, nickel-plated copper foil, carbon-coated copper foil, nickel foil, titanium foil, carbon-containing porous copper foil. Preferably it is the copper foil, the copper foil plated with zinc, nickel and the like, or the carbon-coated copper foil.

The anode electrode active material, the conductive material, and the bonding substance are mixed according to mass percentages of 75-99%, 0.5-8%, and 0.6-15.0%, preferably 75-76%, 76-78%, 78-81%, 81-82%, 82-83%, 83-84%, 84-85%, 85-86%, 86-87%, 87-88%, 88-89%, 89-90%, 90-91%, 91-92%, 92-93%, 93-94%, 94-95%, 95-96%, 96-97% 97-98%, and 98-99%.

The thickness of the silicon anode electrode plate is 25-430 µm, preferably 80-260 µm, and further preferably 82 µm, 85 µm, 90 µm, 95 µm, 100 µm, 105 µm, 110 µm, 120 µm, 125 µm, 130 µm, 135 µm, 140 µm, 145 µm, 150 µm, 155 µm, 160 µm, 180 µm, 200 µm, 210 µm, 220 µm, 225 µm, 230 µm, 240 µm, 250 µm, 255 µm, or any values between 80-260 µm.

The surface density of the anode electrode homogenate on the silicon anode electrode plate obtained is 0.003-0.060 g/cm², preferably 0.006-0.035 g/cm², or 0.007 g/cm², 0.008 g/cm², 0.009 g/cm², 0.010 g/cm², 0.012 g/cm², 0.015 g/cm², 0.017 g/cm², 0.018 g/cm², 0.019 g/cm², 0.020 g/cm², 0.022 g/cm², 0.024 g/cm², 0.025 g/cm², 0.027 g/cm², 0.028 g/cm², 0.030 g/cm², 0.032 g/cm², 0.035 g/cm², or any values between 0.006-0.035 g/cm².

The present disclosure further provides a lithium-ion battery, including the above porous silicon-carbon anode electrode plate.

The present disclosure does not have any special limitations on a specific preparation method for the lithium-ion battery, and a method well-known to those skilled in the art is sufficient.

Specifically, a silicon anode electrode plate, a separator, and a cathode electrode plate are wound to obtain a cell, then the cell is packaged in a housing, it is dried, electrolyte-injected, packaged, formed, and capacity-graded, to obtain the lithium-ion battery.

A cathode electrode active substance in the cathode electrode plate is at least one of lithium cobalt oxide, lithium nickel oxide, lithium manganese oxide, lithium nickel manganese oxide, lithium nickel cobalt manganese oxide, lithium nickel cobalt aluminum oxide, lithium manganese phosphate, lithium iron manganese phosphate, and lithium iron phosphate.

In the present disclosure, the silicon and carbon in the porous sparse silicon-carbon core, the transition layer, and the dense silicon-carbon layer are orderly dispersed and distributed by the different sparse and dense degrees of the pores, the dispersed carbon pores are used to share the expansion of internal silicon. The "dense-net-like" structure carbon of the porous sparse silicon-carbon core is embedded with the silicon crystal particles, which may increase the contact area by using the porous carbon in the "dense-net-like" structure and provide a "spring core" silicon-carbon structure. Its compressive strength is greatly improved, the "sparse-net-like" structure of the carbon coating region has the greater elasticity in the carbon layer, and the dense carbon layer contains lithium or other metals in layers. Its conductivity is improved, the first Coulombic efficiency is more direct, the coating property is more complete, and the detachment of the silicon particles from the porous sparse silicon-carbon core, the transition ring, and the dense silicon ring into the electrolyte is reduced. In summary, the porous sparse silicon-carbon core of the porous silicon-carbon anode electrode material in the present disclosure, and the porous carbon coating layer of the carbon coating layer-the "sparse-net-like" structure carbon layer have the excellent flexibility, larger space, and higher mechanical strength, which may resist the expansion and contraction stress during the lithium intercalation and deintercalation, the dispersed and distributed pore carbon of the porous sparse silicon-carbon core and the double carbon layer in the carbon coating region have the good electrical conductivity. In summary, the comprehensive performance of the carbon structure and SiOx distribution of the porous silicon-carbon anode electrode material in the present disclosure effectively slows down the expansion of the silicon anode electrode material in the cycling process, controls the capacity fade, and improves the cycling stability.

In order to further understand the present disclosure, the porous silicon-carbon anode electrode material, the preparation method, and the application provided by the present disclosure are described below in combination with embodiments. The scope of protection of the present disclosure is not limited by the following embodiments.

### Embodiment 1:

### 1. Preparation of porous silicon-carbon anode electrode material

(1) SiO₂ with a particle size of 3-200 nm was mixed with an asphalt resin, and ammonium bicarbonate was added to obtain a mixture (added in a mass ratio of 100:30:0.05). It was sent to a reaction kettle, vacuumized to remove most of the air in the mixture, and heated at 150 °C, a nitrogen gas was fed to be pressurized, formation of micro-pores was maintained in the mixture, and it was cooled after being stabilized, to obtain a mixed solid.
(2) The mixed solid was sent to a heating furnace for high-temperature heating at 700 °C, it was cooled, broken, and crushed to obtain particles with a particle size of 1.2-23 µm, the particles were mixed with a hydrofluoric acid for acid washing, and the acid-washed particles were sent to water for washing, and dried to obtain a porous silicon precursor (namely a porous sparse silicon-carbon core).
(3) The porous silicon precursor was sent to the heating furnace, a silicon hydride compound Si₂H₆ was fed, and high-temperature treatment was performed at 400 °C under a pressure of 0.10 MPa; and then, the temperature was raised to 560 °C, an acetylene mixed gas using a nitrogen gas as a carrier gas (the volume ratio of the nitrogen gas was 65%) was subjected to a gas-phase deposition reaction on the porous silicon precursor for 4 h, to obtain a carbon deposition layer on the porous silicon precursor, and after deposition, annealing and cooling were performed.
(4) The above porous silicon precursor and magnesium powder (added in a mass ratio of 100:2.5) were added with a dispersant (30wt% glycerol aqueous solution), it was mixed, immersed, stirred uniformly, spray-dried, and sent to the heating furnace for high-temperature treatment at 350 °C for 4 h, and after annealing and cooling, the porous silicon-carbon anode electrode material was obtained.

The cross-section of the porous silicon-carbon anode electrode material was observed, herein a sparse silicon region (corresponding to a porous sparse silicon-carbon core), a transition ring (corresponding to a transition layer), a dense silicon ring (corresponding to a dense silicon-carbon layer), and a carbon coating region (corresponding to a porous carbon coating layer and a dense carbon coating layer) on the cross-section of the porous silicon-carbon anode electrode material were obtained by the following method:

Powder of the porous silicon-carbon anode electrode material was dispersed in an embedded resin, and it was mixed uniformly, and vacuumized to exhaust bubbles. Embedding treatment was performed at 75 °C, the embedded resin was solidified into a solid, the solid resin was cut into a quadrilateral with a blade, and then it was fixed on an ultra-thin slicer. The shorter side of the quadrilateral faced to the blade, and it was cut into nanoscale thin slices. The sparse silicon region, the transition ring, the dense silicon ring, and the carbon coating region obtained on the cross-section of the porous silicon-carbon anode electrode material were observed by using a scanning electron microscope and a transmission electron microscope. Herein, the porous silicon-carbon anode electrode material was subjected to treatment such as crushing and ball-milling during preparation. The porous silicon-carbon anode electrode material presented particle shapes such as spherical, ellipsoidal, block-shaped, strip-shaped, and sheet-shaped, so that the two-dimensional cross-sections of the sparse silicon region, the transition ring, the dense silicon ring, and the carbon coating region obtained by sectioning the porous silicon-carbon anode electrode material were sphere, ellipse, irregular polygon, circular ring, polygonal ring, arc-shaped ring, irregular ring, irregular edge and the like.

Referring to Fig. 2, Fig. 2 was a TEM image of the porous silicon-carbon anode electrode material provided by the present disclosure. In Fig. 2, 1 was a porous sparse silicon-carbon core, 2 was a transition layer, 3 was a dense silicon-carbon layer, 4 was a porous carbon coating layer, and 5 was a dense carbon coating layer.

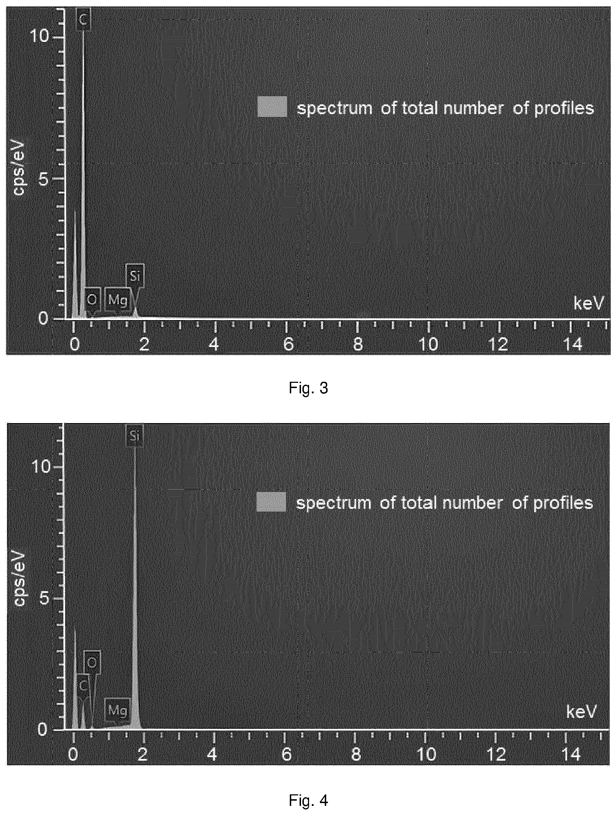

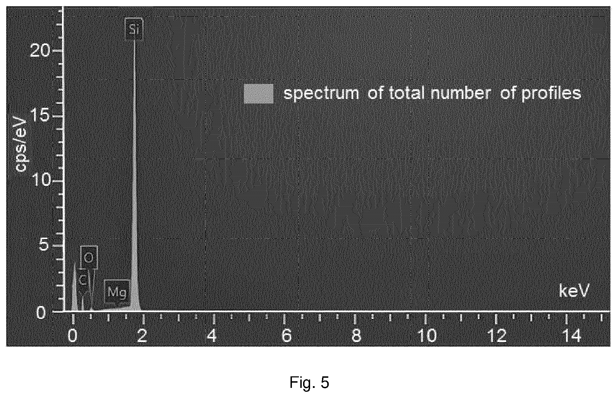

EDS detection was performed on the porous silicon-carbon anode electrode material obtained, and results were shown in Figs. 3-5. Fig. 3 was an EDS energy spectrum of the porous sparse silicon-carbon core of the porous silicon-carbon anode electrode material prepared in Embodiment 1; Fig. 4 was an EDS energy spectrum of the transition layer of the porous silicon-carbon anode electrode material prepared in Embodiment 1; and Fig. 5 was an EDS energy spectrum of the dense silicon-carbon layer of the porous silicon-carbon anode electrode material prepared in Embodiment 1. From Figs. 3-5, it may be seen that the carbon and silicon contents of the porous sparse silicon-carbon core were 54.41wt% and 43.7wt% respectively; the carbon and silicon contents of the transition layer were 37.35wt% and 61.87wt% respectively; and the carbon and silicon contents of the dense silicon-carbon layer were 28.07wt% and 70.48wt% respectively. The dense silicon-carbon layer has an oligoporous structure, the pore volume of the oligoporous structure is 0.0010 cm³/g per gram of the porous silicon-carbon anode electrode material.

### 2. Application of porous silicon-carbon anode electrode material

### 2.1. Application of porous silicon-carbon anode electrode material in silicon anode electrode plate

(1) Silicon anode electrode plate: porous silicon-carbon anode electrode material + modified artificial graphite (the mass ratio of the porous silicon-carbon anode electrode material was 15%), carbon nano tube-shaped conductive material, and 95% carboxymethyl cellulose sodium + 5% butadiene styrene rubber (added in mass ratios of 96%, 1.5%, and 2.5%) were mixed, deionized water was added to stir, the solid content was controlled to 50%, and the viscosity was adjusted to 3100 mPa.s, to obtain an anode electrode homogenate. The anode electrode homogenate was coated on a nickel-plated copper foil, and it was dried, and plate-pressed, to obtain a silicon anode electrode plate with a thickness of 118 µm.

### 2.2. Application of silicon anode electrode plate in lithium-ion battery:

The silicon anode electrode plate, a separator, and a lithium nickel cobalt manganese oxide cathode electrode plate were wound to obtain a cell, then the cell was packaged in a housing, it was dried, electrolyte-injected, packaged, formed, and capacity-graded, to obtain a lithium-ion battery.

### Embodiment 2:

### 1. Preparation of porous silicon-carbon anode electrode material

(1) SiO₂ with a particle size of 3-200 nm was mixed with an asphalt resin, and ammonium bicarbonate was added to obtain a mixture (added in a mass ratio of 100:30:0.05). It was sent to a reaction kettle, vacuumized to remove most of the air in the mixture, and heated at 150 °C, a nitrogen gas was fed to be pressurized, formation of micro-pores was maintained in the mixture, and it was cooled after being stabilized, to obtain a mixed solid.
(2) The mixed solid was sent to a heating furnace for high-temperature heating at 750 °C, it was cooled, broken, and crushed to obtain particles with a particle size of 1.6-27 µm, the particles were mixed with a hydrofluoric acid for acid washing, and the acid-washed particles were sent to water for washing, and dried to obtain a porous silicon precursor.
(3) The porous silicon precursor was sent to the heating furnace, a silicon hydride compound Si₂H₆ was fed, and high-temperature treatment was performed at 400 °C under a pressure of 0.10 MPa; and then, the temperature was raised to 660 °C, an acetylene mixed gas using a nitrogen gas as a carrier gas (the volume ratio of the nitrogen gas was 65%) was subjected to a gas-phase deposition reaction on the porous silicon precursor for 4 h, to obtain a carbon deposition layer on the porous silicon precursor, and after deposition, annealing and cooling were performed.
(4) The above porous silicon precursor and magnesium powder (added in a mass ratio of 100:2.5) were added with a dispersant (30wt% glycerol aqueous solution), it was mixed, immersed, stirred uniformly, spray-dried, and sent to the heating furnace for high-temperature treatment at 400 °C for 2 h, and after annealing and cooling, the porous silicon-carbon anode electrode material was obtained. The dense silicon-carbon layer has an oligoporous structure, the pore volume of the oligoporous structure is 0.0010 cm³/g per gram of the porous silicon-carbon anode electrode material.

### 2. Application of porous silicon-carbon anode electrode material

### 2.1. Application of porous silicon-carbon anode electrode material in silicon anode electrode plate

(1) Silicon anode electrode plate: porous silicon-carbon anode electrode material + modified artificial graphite (the mass ratio of the porous silicon-carbon anode electrode material was 30%), carbon nano tube-shaped conductive material, and 95% carboxymethyl cellulose sodium + 5% butadiene styrene rubber (added in mass ratios of 96%, 1.5%, and 2.5%) were mixed, deionized water was added to stir, the solid content was controlled to 50%, and the viscosity was adjusted to 3000 mPa.s, to obtain an anode electrode homogenate. The anode electrode homogenate was coated on a nickel-plated copper foil, and it was dried, and plate-pressed, to obtain a silicon anode electrode plate with a thickness of 104 µm.

### 2.2. Application of silicon anode electrode plate in lithium-ion battery:

The silicon anode electrode plate, a separator, and a lithium nickel cobalt manganese oxide cathode electrode plate were wound to obtain a cell, then the cell was packaged in a housing, it was dried, electrolyte-injected, packaged, formed, and capacity-graded, to obtain a lithium-ion battery.

### Embodiment 3:

### 1. Preparation of porous silicon-carbon anode electrode material

(1) SiO₂ with a particle size of 3-200 nm was mixed with an asphalt resin, and ammonium bicarbonate was added to obtain a mixture (added in a mass ratio of 100:30:0.05). It was sent to a reaction kettle, vacuumized to remove most of the air in the mixture, and heated at 150 °C, a nitrogen gas was fed to be pressurized, formation of micro-pores was maintained in the mixture, and it was cooled after being stabilized, to obtain a mixed solid.
(2) The mixed solid was sent to a heating furnace for high-temperature heating at 850 °C, it was cooled, broken, and crushed to obtain particles with a particle size of 1.1-20 µm, the particles were mixed with a hydrofluoric acid for acid washing, and the acid-washed particles were sent to water for washing, and dried to obtain a porous silicon precursor.
(3) The porous silicon precursor was sent to the heating furnace, a silicon hydride compound Si₂H₆ was fed, and high-temperature treatment was performed at 400 °C under a pressure of 0.10 MPa; and then, the temperature was raised to 780 °C, an acetylene mixed gas using a nitrogen gas as a carrier gas (the volume ratio of the nitrogen gas was 65%) was subjected to a gas-phase deposition reaction on the porous silicon precursor for 4 h, to obtain a carbon deposition layer on the porous silicon precursor, and after deposition, annealing and cooling were performed.
(4) The above porous silicon precursor and magnesium aluminate (added in a mass ratio of 100:2.5) were added with a dispersant (30wt% glycerol aqueous solution), it was mixed, immersed, stirred uniformly, spray-dried, and sent to the heating furnace for high-temperature treatment at 450 °C for 1 h 30 min, and after annealing and cooling, the porous silicon-carbon anode electrode material was obtained. The dense silicon-carbon layer has an oligoporous structure, the pore volume of the oligoporous structure is 0.0010 cm³/g per gram of the porous silicon-carbon anode electrode material.

### 2. Application of porous silicon-carbon anode electrode material

### 2.1. Application of porous silicon-carbon anode electrode material in silicon anode electrode plate

(1) Silicon anode electrode plate: porous silicon-carbon anode electrode material + modified artificial graphite (the mass ratio of the porous silicon-carbon anode electrode material was 45%), carbon nano tube-shaped conductive material, and 95% carboxymethyl cellulose sodium + 5% butadiene styrene rubber (added in mass ratios of 96%, 1.5%, and 2.5%) were mixed, deionized water was added to stir, the solid content was controlled to 50%, and the viscosity was adjusted to 2700 mPa.s, to obtain an anode electrode homogenate. The anode electrode homogenate was coated on a nickel-plated copper foil, and it was dried, and plate-pressed, to obtain a silicon anode electrode plate with a thickness of 93 µm.

### 2.2. Application of silicon anode electrode plate in lithium-ion battery:

The silicon anode electrode plate, a separator, and a lithium nickel cobalt manganese oxide cathode electrode plate were wound to obtain a cell, then the cell was packaged in a housing, it was dried, electrolyte-injected, packaged, formed, and capacity-graded, to obtain a lithium-ion battery.

### Embodiment 4:

### 1. Preparation of porous silicon-carbon anode electrode material

(1) Tetraethyl orthosilicate was mixed with an asphalt resin, and ammonium bicarbonate was added to obtain a mixture (added in a mass ratio of 100:25:0.08). It was sent to a reaction kettle, vacuumized to remove most of the air in the mixture, and heated at 160 °C, a nitrogen gas was fed to be pressurized, formation of micro-pores was maintained in the mixture, and it was cooled after being stabilized, to obtain a mixed solid.
(2) The mixed solid was sent to a heating furnace for high-temperature heating at 900 °C, it was cooled, broken, and crushed to obtain particles with a particle size of 1.1-18 µm, the particles were mixed with a hydrofluoric acid for acid washing, and the acid-washed particles were sent to water for washing, and dried to obtain a porous silicon precursor.
(3) The porous silicon precursor was sent to the heating furnace, a silicon hydride compound Si₂H₆ was fed, and high-temperature treatment was performed at 400 °C under a pressure of 0.15 MPa; and then, the temperature was raised to 560 °C, an acetylene mixed gas using a nitrogen gas as a carrier gas (the volume ratio of the nitrogen gas was 85%) was subjected to a gas-phase deposition reaction on the porous silicon precursor for 4 h, to obtain a carbon deposition layer on the porous silicon precursor, and after deposition, annealing and cooling were performed.
(4) The above porous silicon precursor and magnesium aluminate (added in a mass ratio of 100:0.85) were added with a dispersant (30wt% glycerol aqueous solution), it was mixed, immersed, stirred uniformly, spray-dried, and sent to the heating furnace for high-temperature treatment at 350 °C for 4 h, and after annealing and cooling, the porous silicon-carbon anode electrode material was obtained. The dense silicon-carbon layer has an oligoporous structure, the pore volume of the oligoporous structure is 0.0010 cm³/g per gram of the porous silicon-carbon anode electrode material.

### 2. Application of porous silicon-carbon anode electrode material

### 2.1. Application of porous silicon-carbon anode electrode material in silicon anode electrode plate

(1) Silicon anode electrode plate: porous silicon-carbon anode electrode material, 20% conductive carbon black + 80% carbon nano tube-shaped conductive material, and 95% carboxymethyl cellulose sodium + 5% polyacrylonitrile (added in mass ratios of 93%, 2%, and 5%) were mixed, deionized water was added to stir, the solid content was controlled to 45%, and the viscosity was adjusted to 4100 mPa.s, to obtain an anode electrode homogenate. The anode electrode homogenate was coated on a nickel-plated copper foil, and it was dried, and plate-pressed, to obtain a silicon anode electrode plate with a thickness of 142 µm.

### 2.2. Application of silicon anode electrode plate in lithium-ion battery:

The silicon anode electrode plate, a separator, and a lithium nickel cobalt manganese oxide cathode electrode plate were wound to obtain a cell, then the cell was packaged in a housing, it was dried, electrolyte-injected, packaged, formed, and capacity-graded, to obtain a lithium-ion battery.

### Embodiment 5:

### 1. Preparation of porous silicon-carbon anode electrode material

(1) Tetraethyl orthosilicate was mixed with an asphalt resin, and ammonium bicarbonate was added to obtain a mixture (added in a mass ratio of 100:25:0.08). It was sent to a reaction kettle, vacuumized to remove most of the air in the mixture, and heated at 160 °C, a nitrogen gas was fed to be pressurized, formation of micro-pores was maintained in the mixture, and it was cooled after being stabilized, to obtain a mixed solid.
(2) The mixed solid was sent to a heating furnace for high-temperature heating at 930 °C, it was cooled, broken, and crushed to obtain particles with a particle size of 1.2-22.4 µm, the particles were mixed with a hydrofluoric acid for acid washing, and the acid-washed particles were sent to water for washing, and dried to obtain a porous silicon precursor.
(3) The porous silicon precursor was sent to the heating furnace, a silicon hydride compound Si₂H₆ was fed, and high-temperature treatment was performed at 400 °C under a pressure of 0.15 MPa; and then, the temperature was raised to 660 °C, an acetylene mixed gas using a nitrogen gas as a carrier gas (the volume ratio of the nitrogen gas was 85%) was subjected to a gas-phase deposition reaction on the porous silicon precursor for 4 h, to obtain a carbon deposition layer on the porous silicon precursor, and after deposition, annealing and cooling were performed.
(4) The above porous silicon precursor and magnesium aluminate (added in a mass ratio of 100:0.85) were added with a dispersant (30wt% glycerol aqueous solution), it was mixed, immersed, stirred uniformly, spray-dried, and sent to the heating furnace for high-temperature treatment at 400 °C for 2 h, and after annealing and cooling, the porous silicon-carbon anode electrode material was obtained. The dense silicon-carbon layer has an oligoporous structure, the pore volume of the oligoporous structure is 0.0010 cm³/g per gram of the porous silicon-carbon anode electrode material.

### 2. Application of porous silicon-carbon anode electrode material

### 2.1. Application of porous silicon-carbon anode electrode material in silicon anode electrode plate

(1) Silicon anode electrode plate: porous silicon-carbon anode electrode material, 20% conductive carbon black + 80% carbon nano tube-shaped conductive material, and 95% carboxymethyl cellulose sodium + 5% polyacrylonitrile (added in mass ratios of 93%, 2%, and 5%) were mixed, deionized water was added to stir, the solid content was controlled to 45%, and the viscosity was adjusted to 4600 mPa.s, to obtain an anode electrode homogenate. The anode electrode homogenate was coated on a nickel-plated copper foil, and it was dried, and plate-pressed, to obtain a silicon anode electrode plate with a thickness of 138 µm.

### 2.2. Application of silicon anode electrode plate in lithium-ion battery:

The silicon anode electrode plate, a separator, and a lithium nickel cobalt manganese oxide cathode electrode plate were wound to obtain a cell, then the cell was packaged in a housing, it was dried, electrolyte-injected, packaged, formed, and capacity-graded, to obtain a lithium-ion battery.

### Embodiment 6:

### 1. Preparation of porous silicon-carbon anode electrode material

(1) Tetraethyl orthosilicate was mixed with an asphalt resin, and ammonium bicarbonate was added to obtain a mixture (added in a mass ratio of 100:25:0.08). It was sent to a reaction kettle, vacuumized to remove most of the air in the mixture, and heated at 160 °C, a nitrogen gas was fed to be pressurized, formation of micro-pores was maintained in the mixture, and it was cooled after being stabilized, to obtain a mixed solid.
(2) The mixed solid was sent to a heating furnace for high-temperature heating at 950 °C, it was cooled, broken, and crushed to obtain particles with a particle size of 1.3-18.8 µm, the particles were mixed with a hydrofluoric acid for acid washing, and the acid-washed particles were sent to water for washing, and dried to obtain a porous silicon precursor.
(3) The porous silicon precursor was sent to the heating furnace, a silicon hydride compound Si₂H₆ was fed, and high-temperature treatment was performed at 400 °C under a pressure of 0.15 MPa; and then, the temperature was raised to 780 °C, an acetylene mixed gas using a nitrogen gas as a carrier gas (the volume ratio of the nitrogen gas was 85%) was subjected to a gas-phase deposition reaction on the porous silicon precursor for 4 h, to obtain a carbon deposition layer on the porous silicon precursor, and after deposition, annealing and cooling were performed.
(4) The above porous silicon precursor and magnesium aluminate (added in a mass ratio of 100:1.30) were added with a dispersant (30wt% glycerol aqueous solution), it was mixed, immersed, stirred uniformly, spray-dried, and sent to the heating furnace for high-temperature treatment at 450 °C for 1 h 30 min, and after annealing and cooling, the porous silicon-carbon anode electrode material was obtained. The dense silicon-carbon layer has an oligoporous structure, the pore volume of the oligoporous structure is 0.0010 cm³/g per gram of the porous silicon-carbon anode electrode material.

### 2. Application of porous silicon-carbon anode electrode material

### 2.1. Application of porous silicon-carbon anode electrode material in silicon anode electrode plate

(1) Silicon anode electrode plate: porous silicon-carbon anode electrode material, 20% conductive carbon black + 80% carbon nano tube-shaped conductive material, and 95% carboxymethyl cellulose sodium + 5% polyacrylonitrile (added in mass ratios of 93%, 2%, and 5%) were mixed, deionized water was added to stir, the solid content was controlled to 45%, and the viscosity was adjusted to 4300 mPa.s, to obtain an anode electrode homogenate. The anode electrode homogenate was coated on a nickel-plated copper foil, and it was dried, and plate-pressed, to obtain a silicon anode electrode plate with a thickness of 141 µm.

### 2.2. Application of silicon anode electrode plate in lithium-ion battery:

The silicon anode electrode plate, a separator, and a lithium nickel cobalt manganese oxide cathode electrode plate were wound to obtain a cell, then the cell was packaged in a housing, it was dried, electrolyte-injected, packaged, formed, and capacity-graded, to obtain a lithium-ion battery.

### Embodiment 7:

### 1. Preparation of porous silicon-carbon anode electrode material

(1) Tetraethyl orthosilicate was mixed with an asphalt resin, and ammonium bicarbonate was added to obtain a mixture (added in a mass ratio of 100:25:0.08). It was sent to a reaction kettle, vacuumized to remove most of the air in the mixture, and heated at 160 °C, a nitrogen gas was fed to be pressurized, formation of micro-pores was maintained in the mixture, and it was cooled after being stabilized, to obtain a mixed solid.
(2) The mixed solid was sent to a heating furnace for high-temperature heating at 980 °C, it was cooled, broken, and crushed to obtain particles with a particle size of 1.6-23.7 µm, the particles were mixed with a hydrofluoric acid for acid washing, and the acid-washed particles were sent to water for washing, and dried to obtain a porous silicon precursor.
(3) The porous silicon precursor was sent to the heating furnace, a silicon hydride compound Si₂H₆ was fed, and high-temperature treatment was performed at 400 °C under a pressure of 0.15 MPa; and then, the temperature was raised to 850 °C, an acetylene mixed gas using a nitrogen gas as a carrier gas (the volume ratio of the nitrogen gas was 85%) was subjected to a gas-phase deposition reaction on the porous silicon precursor for 4 h, to obtain a carbon deposition layer on the porous silicon precursor, and after deposition, annealing and cooling were performed.
(4) The above porous silicon precursor and magnesium aluminate (added in a mass ratio of 100:1.30) were added with a dispersant (30wt% glycerol aqueous solution), it was mixed, immersed, stirred uniformly, spray-dried, and sent to the heating furnace for high-temperature treatment at 500 °C for 1 h, and after annealing and cooling, the porous silicon-carbon anode electrode material was obtained. The dense silicon-carbon layer has an oligoporous structure, the pore volume of the oligoporous structure is 0.0010 cm³/g per gram of the porous silicon-carbon anode electrode material.

### 2. Application of porous silicon-carbon anode electrode material

### 2.1. Application of porous silicon-carbon anode electrode material in silicon anode electrode plate

(1) Silicon anode electrode plate: porous silicon-carbon anode electrode material, 20% conductive carbon black + 80% carbon nano tube-shaped conductive material, and 95% carboxymethyl cellulose sodium + 5% polyacrylonitrile (added in mass ratios of 93%, 2%, and 5%) were mixed, deionized water was added to stir, the solid content was controlled to 45%, and the viscosity was adjusted to 4400 mPa.s, to obtain an anode electrode homogenate. The anode electrode homogenate was coated on a nickel-plated copper foil, and it was dried, and plate-pressed, to obtain a silicon anode electrode plate with a thickness of 136 µm.

### 2.2. Application of silicon anode electrode plate in lithium-ion battery:

The silicon anode electrode plate, a separator, and a lithium nickel cobalt manganese oxide cathode electrode plate were wound to obtain a cell, then the cell was packaged in a housing, it was dried, electrolyte-injected, packaged, formed, and capacity-graded, to obtain a lithium-ion battery.

### Contrast example 1:

The difference from Embodiment 1 was that in the preparation of the porous silicon-carbon anode electrode material, acid-washing was not performed in Step (1), so that a porous sparse silicon-carbon core lacking in silicon was not formed.

### Contrast example 2:

The difference from Embodiment 1 was that in the preparation of the porous silicon-carbon anode electrode material, an acetylene mixed gas using a nitrogen gas as a carrier gas was not used for gas-phase deposition in Step (3), so that a porous carbon coating layer in a carbon coating layer was lacked.

### Contrast example 3:

The difference from Embodiment 1 was that in the preparation of the porous silicon-carbon anode electrode material, there was no Step (4), so that a dense carbon coating layer in a carbon coating layer was lacked.

### Contrast example 4:

The difference from Embodiment 1 was that in the preparation of the porous silicon-carbon anode electrode material, there were no Steps (3) and (4), so that a carbon coating layer was lacked.

### Embodiment and contrast example testing:

### 1. Compressive strength and powder resistance of porous silicon-carbon anode electrode material Dv10, and expansion condition of silicon anode electrode plate of battery under full charge:

Dv10 compressive strength: the silicon anode electrode material in each embodiment and contrast example was placed in a square groove, and the silicon anode electrode material in the square groove was extruded under pressures of 1.3 and 2.6 MPa. Changes of Dv10 (the particle size (µm) of 10% of the silicon anode electrode material in volume distribution) before and after extrusion were recorded, the particle size change of the silicon anode electrode material was smaller, and the compressive strength of Dv10 was higher; a powder resistance meter was used to measure the powder resistance of the silicon anode electrode material in each embodiment and contrast example; and the thickness of the silicon anode electrode plate after plate-pressing and the thickness of the electrode plate of the battery under full charge were measured, expansion rate of silicon anode electrode plate = (thickness of electrode plate of battery under full charge - thickness of silicon anode electrode plate after plate-pressing)/ thickness of silicon anode electrode plate after plate-pressing * 100%.

### 2. Battery electrical performance detection:

At a normal temperature of 25 °C, and at initial voltages of 2.8 V and cut-off voltages of 4.35 V, it was charged to 4.35 V at 1 C, and charged at a constant voltage of 4.35 V until the current was decreased to 0.05 C, it was discharged to 2.8 V at 0.5 C, then it was charged to 4.35 V at 1 C, and charged at the constant voltage of 4.35 V until the current was decreased to 0.05 C, and it was discharged to 2.8 V at 0.5 C. The battery was charged and discharged in this cycle, and the first Coulombic efficiency of the battery in the first cycle of charging and discharging, and the capacity retention rates in the 100-th and 500-th cycles were calculated.

**Table 1: Compressive strength of silicon anode electrode material Dv10**

| | Dv10 (µm) | | |
|---|---|---|---|
| | Before extrusion | 1.3 MPa extrusion | 2.6 MPa extrusion |
| Embodiment 1 | 3.53 | 2.44 | 2.33 |
| Embodiment 2 | 3.46 | 3.34 | 3.22 |
| Embodiment 3 | 3.57 | 3.42 | 3.37 |
| Embodiment 4 | 3.55 | 3.31 | 3.29 |
| Embodiment 5 | 3.43 | 3.37 | 3.25 |
| Embodiment 6 | 3.49 | 3.36 | 3.22 |
| Embodiment 7 | 3.45 | 3.37 | 3.26 |
| Contrast example 1 | 3.52 | 3.21 | 3.19 |
| Contrast example 2 | 3.54 | 3.24 | 3.16 |
| Contrast example 3 | 3.58 | 3.18 | 3.09 |
| Contrast example 4 | 3.47 | 3.12 | 3.02 |

**Table 2: Powder resistance and expansion condition of silicon anode electrode plate**

| | Powder resistance (Ω) | Expansion rate |
|---|---|---|
| Embodiment 1 | 0.203 | 46.7 % |
| Embodiment 2 | 0.211 | 46.1 % |
| Embodiment 3 | 0.156 | 42.6 % |
| Embodiment 4 | 0.234 | 46.2 % |
| Embodiment 5 | 0.215 | 42.6 % |
| Embodiment 6 | 0.246 | 45.8 % |
| Embodiment 7 | 0.274 | 47.2 % |
| Contrast example 1 | 0.290 | 62.9 % |
| Contrast example 2 | 0.313 | 55.7 % |
| Contrast example 3 | 7.230 | 56.3 % |
| Contrast example 4 | 25.344 | 58.4 % |

**Table 3: First Coulombic efficiency and capacity retention rate of battery**

| | First Coulombic efficiency | Capacity retention rate at 25 °C | |
|---|---|---|---|
| | | 100-th cycle | 500-th cycle |
| Embodiment 1 | 89.3% | 97% | 97% |
| Embodiment 2 | 89.1% | 98% | 98% |
| Embodiment 3 | 88.8% | 97% | 97% |
| Embodiment 4 | 90.5% | 97% | 97% |
| Embodiment 5 | 90.9% | 98% | 98% |
| Embodiment 6 | 89.1% | 97% | 97% |
| Embodiment 7 | 89.8% | 96% | 96% |
| Contrast example 1 | 89.7% | 96% | 91% |
| Contrast example 2 | 91.6% | 92% | 92% |
| Contrast example 3 | 81.8% | 87% | 83% |
| Contrast example 4 | 78.4% | 82.7% | 73.2% |

In Table 1, the compressive strengths of Dv10 were all decreased under 1.3 MPa extrusion and 2.6MPa extrusion in Contrast examples 1-4, and all lower than those in Embodiments 1-7, herein Dv10 in Contrast example 4 was decreased from 3.12 µm to 3.02 µm, it was indicated that the compressive strengths of the silicon anode electrode material Dv10 were all decreased due to the lack of the carbon coating layer (the porous and dense carbon coating layers) and the porous sparse silicon-carbon core, and the effect on the carbon coating layer was greatest; and in Table 2, the powder resistance in Contrast example 4 was highest (25.344 Ω), and the changes in Contrast examples 4, 3, 2, and 1 were reduced sequentially, it was indicated that the increase of the powder resistance in Contrast example 4 was greatest due to the lack of the carbon coating layer, increasing the dense carbon coating layer in the carbon coating region may greatly improve the conductivity of the silicon anode electrode material, and secondly, the porous carbon coating layer in the carbon coating region and the porous sparse silicon-carbon core may slightly increase the conductivity of the silicon anode electrode material.

In Table 2, the expansion rates in Contrast examples 1-4 were 62.9%, 55.7%, 56.3%, and 58.4% respectively, and the expansion rate in Contrast example 1 was highest, it was indicated that the effect on the expansion of the silicon anode electrode material was greatest due to the lack of the porous sparse silicon-carbon core. Therefore, the use of the dispersed carbon pores to share the expansion of internal silicon effectively slows down the expansion of the silicon anode electrode material in the cycling process. In Table 3, it was not difficult to find that the first Coulombic efficiency was decreased most significantly in Contrast example 4, it was indicated that increasing the carbon coating layer (including the porous carbon coating layer and the dense carbon coating layer) may greatly improve the first Coulombic efficiency. In addition, Contrast examples 1-4 were compared with Embodiments 1-7, the comprehensive utilization of the porous carbon coating layer, the dense carbon coating layer, and the porous sparse silicon-carbon core may improve the capacity retention rate and the battery cycling stability.

## Claims

1. A porous silicon-carbon anode electrode material, wherein the anode electrode material has a core-shell structure and the core-shell structure sequentially comprises: a porous sparse silicon-carbon core, a transition layer, a dense silicon-carbon layer, and a carbon coating layer from inside to outside; wherein
the transition layer comprises a carbon skeleton and silicon crystal particles inserted in the carbon skeleton, and the carbon skeleton at least comprises pore carbon and poreless carbon;
the carbon content of the porous sparse silicon-carbon core is >40wt%;
the carbon content of the transition layer is 10wt%-40wt%; and
the carbon content of the dense silicon layer is 2wt%-32wt%.

2. The porous silicon-carbon anode electrode material according to claim 1, wherein the structure of the transition layer gradually becomes denser in a direction from the porous sparse silicon-carbon core to the dense silicon-carbon layer; and
the thickness of the transition layer is 3-150 nm.

3. The porous silicon-carbon anode electrode material according to claim 1, wherein the dense silicon-carbon layer is an oligoporous structure, and comprises carbon particles and silicon crystal particles, wherein the silicon crystal particles are in close contact with the carbon particles; and
the thickness of the dense silicon-carbon layer is 2-150 nm.

4. The porous silicon-carbon anode electrode material according to claim 1, wherein the thickness of the carbon coating layer is 5-400 nm;
the carbon coating layer sequentially comprises a porous carbon coating layer and a dense carbon coating layer from inside to outside;
the porous carbon coating layer is a porous fluffy structure;
the dense carbon coating layer is a dense structure;
the thickness of the porous carbon coating layer is greater than the thickness of the dense carbon coating layer; and
the porosity of the porous carbon coating layer structure is greater than the porosity of the porous sparse silicon-carbon core structure;
the pore volume of the porous carbon coating layer is greater than the pore volume of the dense carbon coating layer.

5. The porous silicon-carbon anode electrode material according to claim 1, wherein the residual alkaline lithium content of the porous silicon-carbon anode electrode material is 50-4000 ppm.

6. A preparation method for the porous silicon-carbon anode electrode material according to any one of claims 1-5, comprising the following steps:
A) mixing a first silicon source compound, a first carbon source compound, and ammonium bicarbonate, heating after being vacuumized, then feeding a non-oxidizing gas to be pressurized, maintaining formation of micro-pores in a mixture, and cooling after being stabilized, to obtain a mixed solid;
B) heating the mixed solid at a high temperature and crushing, then mixing with a hydrofluoric acid for acid washing, to obtain a porous silicon precursor;
C) mixing the porous silicon precursor with a silicon hydride compound SiₙH₂ₙ₊₂, performing high-temperature treatment under a certain pressure condition, then feeding an acetylene mixed gas using the non-oxidizing gas as a carrier gas for a gas-phase deposition reaction, to obtain a reaction product; and
D) mixing the reaction product with a functional material and a dispersant, and after being spray-dried, performing a high-temperature reaction, to obtain the porous silicon-carbon anode electrode material.

7. An anode electrode plate, comprising the porous silicon-carbon anode electrode material according to any one of claims 1-5 or the porous silicon-carbon anode electrode material prepared by the preparation method according to claim 6.

8. A lithium-ion battery, comprising the anode electrode plate according to claim 7.

## Patentansprüche

1. Poröses Silicium-Kohlenstoff-Anodenelektrodenmaterial, wobei das Anodenelektrodenmaterial aufweist
eine Kern-Schale-Struktur und die Kern-Schale-Struktur nacheinander umfasst: einen porösen lockeren Silicium-Kohlenstoff-Kern, eine Übergangsschicht, eine dichte Silicium-Kohlenstoff-Schicht und eine KohlenstoffBeschichtungsschicht von innen nach außen; wobei
die Übergangsschicht ein Kohlenstoffgerüst und in das Kohlenstoffgerüst eingefügte Silicium-Kristallpartikel umfasst, und das Kohlenstoffgerüst mindestens Porenkohlenstoff und porenlosen Kohlenstoff umfasst;
der Kohlenstoffgehalt des porösen lockeren Silicium-Kohlenstoff-Kerns >40 Gew.-% beträgt;
der Kohlenstoffgehalt der Übergangsschicht 10 Gew.-% - 40 Gew.-% beträgt; und
der Kohlenstoffgehalt der dichten Silicium-Schicht 2 Gew.-% - 32 Gew.-% beträgt.

2. Poröses Silicium-Kohlenstoff-Anodenelektrodenmaterial nach Anspruch 1, wobei die Struktur der Übergangsschicht in einer Richtung von dem porösen lockeren Silicium-Kohlenstoff-Kern zu der dichten Silicium-Kohlenstoff-Schicht allmählich dichter wird; und
die Dicke der Übergangsschicht 3-150 nm beträgt.

3. Poröses Silicium-Kohlenstoff-Anodenelektrodenmaterial nach Anspruch 1, wobei die dichte Silicium-Kohlenstoff-Schicht eine oligoporöse Struktur ist und Kohlenstoffpartikel und Silicium-Kristallpartikel umfasst, wobei die Silicium-Kristallpartikel in engem Kontakt mit den Kohlenstoffpartikeln stehen; und
die Dicke der dichten Silicium-Kohlenstoff-Schicht 2-150 nm beträgt.

4. Poröses Silicium-Kohlenstoff-Anodenelektrodenmaterial nach Anspruch 1, wobei die Dicke der Kohlenstoffbeschichtungsschicht 5-400 nm beträgt;
die Kohlenstoffbeschichtungsschicht von innen nach außen nacheinander eine poröse Kohlenstoffbeschichtungsschicht und eine dichte Kohlenstoffbeschichtungsschicht umfasst;
die poröse Kohlenstoffbeschichtungsschicht eine poröse flockige Struktur ist;
die dichte Kohlenstoffbeschichtungsschicht eine dichte Struktur ist;
die Dicke der porösen Kohlenstoffbeschichtungsschicht größer als die Dicke der dichten Kohlenstoffbeschichtungsschicht ist; und
die Porosität der porösen Kohlenstoffbeschichtungsschichtstruktur größer als die Porosität der porösen lockeren Silicium-Kohlenstoff-Kernstruktur ist;
das Porenvolumen der porösen Kohlenstoffbeschichtungsschicht größer als das Porenvolumen der dichten Kohlenstoffbeschichtungsschicht ist.

5. Poröses Silicium-Kohlenstoff-Anodenelektrodenmaterial nach Anspruch 1, wobei der Restgehalt an alkalischem Lithium des porösen Silicium-Kohlenstoff-Anodenelektrodenmaterials 50-4000 ppm beträgt.

6. Herstellungsverfahren für das poröse Silicium-Kohlenstoff-Anodenelektrodenmaterial nach einem der Ansprüche 1 bis 5, umfassend die folgenden Schritte:
A) Mischen einer ersten Silicium-Quellenverbindung, einer ersten Kohlenstoffquellenverbindung und von Ammoniumbicarbonat, Erhitzen nach dem Vakuumieren, dann Zuführen eines nicht oxidierenden Gases zur Druckbeaufschlagung, Aufrechterhalten der Ausbildung von Mikroporen in einem Gemisch und Abkühlen nach dem Stabilisieren, um einen gemischten Feststoff zu erhalten;
B) Erhitzen des gemischten Feststoffs bei einer hohen Temperatur und Zerkleinern, dann Mischen mit einer Flusssäure für eine Säurewäsche, um einen porösen Silicium-Vorläufer zu erhalten;
C) Mischen des porösen Silicium-Vorläufers mit einer Silicium-Hydridverbindung SiₙH₂ₙ₊₂, Durchführen einer Hochtemperaturbehandlung unter einer gewissen Druckbedingung, dann Zuführen eines Acetylen-Mischgases unter Verwendung des nicht oxidierenden Gases als Trägergas für eine Gasphasenabscheidungsreaktion, um ein Reaktionsprodukt zu erhalten; und
D) Mischen des Reaktionsprodukts mit einem funktionellen Material und einem Dispergiermittel und, nach dem Sprühtrocknen, Durchführen einer Hochtemperaturreaktion, um das poröse Silicium-Kohlenstoff-Anodenelektrodenmaterial zu erhalten.

7. Anodenelektrodenplatte, umfassend das poröse Silicium-Kohlenstoff-Anodenelektrodenmaterial nach einem der Ansprüche 1 bis 5 oder das poröse Silicium-Kohlenstoff-Anodenelektrodenmaterial, hergestellt durch das Herstellungsverfahren nach Anspruch 6.

8. Lithium-Ionen-Batterie, umfassend die Anodenelektrodenplatte nach Anspruch 7.

## Revendications

1. Matériau d'électrode d'anode de silicium-carbone poreux, dans lequel le matériau d'électrode d'anode a
une structure noyau-enveloppe et la structure noyau-enveloppe comprend séquentiellement : un noyau de silicium-carbone poreux et dispersé, une couche de transition, une couche de silicium-carbone dense et une couche de revêtement de carbone de l'intérieur vers l'extérieur ; dans lequel
la couche de transition comprend un squelette de carbone et des particules de cristal de silicium insérées dans le squelette de carbone, et le squelette de carbone comprend au moins du carbone poreux et du carbone sans pores ;
la teneur en carbone du noyau de silicium-carbone poreux et dispersé est >40 % en poids ;
la teneur en carbone de la couche de transition est de 10 % en poids à 40 % en poids ; et
la teneur en carbone de la couche de silicium dense est de 2 % en poids à 32 % en poids.

2. Matériau d'électrode d'anode de silicium-carbone poreux selon la revendication 1, dans lequel la structure de la couche de transition devient progressivement plus dense dans une direction allant du noyau de silicium-carbone poreux dispersé à la couche de silicium-carbone dense ; et
l'épaisseur de la couche de transition est de 3 à 150 nm.

3. Matériau d'électrode d'anode de silicium-carbone poreux selon la revendication 1, dans lequel la couche de silicium-carbone dense est une structure oligoporeuse, et comprend des particules de carbone et des particules de cristal de silicium, dans lequel les particules de cristal de silicium sont en contact étroit avec les particules de carbone ; et
l'épaisseur de la couche de silicium-carbone dense est de 2 à 150 nm.

4. Matériau d'électrode d'anode de silicium-carbone poreux selon la revendication 1, dans lequel l'épaisseur de la couche de revêtement de carbone est de 5 à 400 nm ;
la couche de revêtement de carbone comprend séquentiellement une couche de revêtement de carbone poreux et une couche de revêtement de carbone dense de l'intérieur vers l'extérieur ;
la couche de revêtement de carbone poreux est une structure poreuse et duveteuse ;
la couche de revêtement de carbone dense est une structure dense ; l'épaisseur de la couche de revêtement de carbone poreux est supérieure à l'épaisseur de la couche de revêtement de carbone dense ; et
la porosité de la structure de couche de revêtement de carbone poreux est supérieure à la porosité du silicium-carbone dispersé poreux sur la structure de noyau ;
le volume de pores de la couche de revêtement de carbone poreux est supérieur au volume de pores de la couche de revêtement de carbone dense.

5. Matériau d'électrode d'anode de silicium-carbone poreux selon la revendication 1, dans lequel la teneur résiduelle en lithium alcalin du matériau d'électrode d'anode de silicium-carbone poreux est de 50 à 4 000 ppm.

6. Procédé de préparation pour le matériau d'électrode d'anode de silicium-carbone poreux selon l'une quelconque des revendications 1 à 5, comprenant les étapes suivantes :
A) mélange d'un premier composé source de silicium, d'un premier composé source de carbone et de bicarbonate d'ammonium, le chauffage après mise sous vide, puis l'introduction d'un gaz non oxydant à mettre sous pression, le maintien de la formation de micropores dans un mélange, et le refroidissement après avoir été stabilisé, pour obtenir un solide mélangé ;
B) chauffage du solide mélangé à haute température et broyage, puis mélange avec un acide fluorhydrique pour un lavage acide, afin d'obtenir un précurseur de silicium poreux ;
C) mélange du précurseur de silicium poreux avec un composé d'hydrure de silicium SiₙH₂ₙ₊₂, la réalisation d'un traitement à haute température sous une certaine condition de pression, puis l'introduction un gaz mélangé à l'acétylène en utilisant le gaz non oxydant comme gaz vecteur pour une réaction de dépôt en phase gazeuse, afin d'obtenir un produit de réaction ; et
D) mélange du produit de réaction avec un matériau fonctionnel et un dispersant, et après séchage par pulvérisation, la réalisation d'une réaction à haute température, pour obtenir le matériau d'électrode d'anode de silicium-carbone poreux.

7. Plaque d'électrode d'anode, comprenant le matériau d'électrode d'anode de silicium-carbone poreux selon l'une quelconque des revendications 1 à 5 ou le matériau d'électrode d'anode de silicium-carbone poreux préparé par la procédé de préparation selon la revendication 6.

8. Batterie lithium-ion, comprenant la plaque d'électrode d'anode selon la revendication 7.
